# EUROPÄISCHE PATENTSCHRIFT

(11) **EP 4 051 517 B1**
(45) Veröffentlichungstag und Bekanntmachung des Hinweises auf die Patenterteilung: **20.11.2024**
(21) Anmeldenummer: 20722287.8
(22) Anmeldetag: 24.04.2020
(51) Int. Cl.: B60G 7/00, F16C 7/02

(54) **LAGERSTRUKTURBAUTEIL**
BEARING STRUCTURE COMPONENT
COMPOSANT STRUCTURAL DE PALIER

(30) Priorität: 30.10.2019 DE 202019106036 U
(43) Veröffentlichungstag der Anmeldung: 07.09.2022
(73) Patentinhaber: Vibracoustic SE, 69469 Weinheim (DE)
(72) Erfinder: WERNER, Philipp, 21339 Lueneburg (DE); KARDOES, Hilrich, 21423 Winsen (DE)
(74) Vertreter: Patentanwälte Olbricht Buchhold Keulertz
(86) Internationale Anmeldenummer: PCT/EP2020/061465
(87) Internationale Veröffentlichungsnummer: WO 2021/083556

(56) Entgegenhaltungen:
- EP-A1- 3 199 390
- DE-A1- 102016 204 015
- JP-A- S5 889 409
- US-A- 4 650 620
- US-A1- 2016 121 650
- ANONYMOUS: "Spritzgegossene Integralschäume mit hoher Biegesteifigkeit und hochwertigen Oberflächen", NEUE MATERIALIEN BAYREUTH GMBH, 14 August 2019 (2019-08-14), XP055909308, Retrieved from the Internet <URL:https://www.nmbgmbh.de/werkstoffe/integralschaeume/> [retrieved on 20220405]
- TECHNISCHEN DER ET AL: "Herstellung und Eigenschaften von spritzgegossenen Magnesium-Integralschäumen", 1 January 2007 (2007-01-01), XP055909316, Retrieved from the Internet <URL:http://www.hochschule-technik.de/pdf/87453_probe.pdf> [retrieved on 20220405]
- ANDREAS HANDSCHKE ET AL: "Thermoplast-Schaumspritzgießen: Physikalisches Schäumen ganz leicht gemacht", KUNSTSTOFFE, CARL HANSER VERLAG, MUNCHEN, DE, 1 October 2012 (2012-10-01), pages 151 - 156, XP002739603, ISSN: 0023-5563
- LIH-SHENG TUFU ET AL: "Effect of Process Conditions on the Weld-Line Strength and Microstructure of Microcellular Injection Molded Parts", POLYMER ENGINEERING AND SCIENCE, JANUARY 2003, VOL. 43, NO. 1, 31 January 2003 (2003-01-31), XP055718031, Retrieved from the Internet <URL:-> [retrieved on 20200724]

## Beschreibung

Die Erfindung betrifft ein Lagerstrukturbauteil für ein Lagerbauteil eines Fahrzeugs, insbesondere eines Kraftfahrzeugs.

Im Fahrzeugbau, insbesondere im Automobilbau, wird mitunter zur Gewichtsreduktion mehr und mehr Metall durch spritzgegossenen Kunststoff ersetzt, so auch in Lagerstrukturbauteilen. Um Kunststoff gerecht zu konstruieren und Zykluszeiten und Gewicht zu minimieren, werden solchen Bauteile in der Regel als verrippte Struktur gefertigt. Zur Erzielung einer hohen Werkstofffestigkeit und eines hohen Moduls werden in Lagerstrukturbauteilen in der Regel faserverstärkte Polymere eingesetzt.

Lagerstrukturbauteile, insbesondere Sandwich-Lagerstrukturbauteile sind im Flugzeug-, Boots- und anderem Leichtbau Stand der Technik. Hier haben sich leichte Kerne, z. B. aus Honeycomb-Wabenstrukturen oder auch aus Schäumen mit einer dünnen, meist endlosfaserverstärkten Decklage auf Ober- und Unterseite bewährt. Dabei geht die Dicke des Kernmaterials maßgeblich in die Biegesteifigkeit des Gesamtbauteils ein, da die Dicke das auf Biegung wirksame Flächenträgheitsmoment maßgeblich bestimmt. Zwischen den Decklagen überträgt der Kern primär Schub im Falle einer Biegebelastung. Zug- und Drucklasten hingegen übertragen nahezu ausschließlich die äußeren Decklagen.

Verrippte Strukturen aus faserverstärkten Polymeren haben jedoch den Nachteil, dass diese zu Schwindung und Verzug, insbesondere auch zu Einfallstellen an Materialanhäufungen, wie Rippenkreuzungspunkten, neigen. Zudem hängen Restkühlzeit und Wandstärke quadratisch voneinander ab, so dass die Wandstärken limitiert sind, möchte man Kunststoffteile wirtschaftlich fertigen. Übliche dicke Wandstärken sind daher nicht größer als 4 mm, nur in Ausnahmefällen verwendet man wesentlich dickere Wandstärken. Darüber hinaus führen Zusammenfließzonen zu inhomogenen Materialgefügen und in Folge nicht optimaler Ausnutzung der Werkstoffeigenschaften.

Befinden sich darüber hinaus Funktionsflächen, die z. B. eine hohe Ebenheit oder Zylindrizität erfordern, an dem Bauteil, sind die Lage der Einfallstellen und das genaue Vorhalten von Schwindung und Verzug noch kritischer. Solche Anforderungen an hohe Ebenheiten können zum Beispiel im Bereich von Dichtungssitzen, beispielsweise an Hydrolagern, an Sitzen für Lagerelemente, etwa Gleit- und Kugellager, dort, wo Abdrückkanten für eine Weiterverarbeitung der Bauteile mittels Vulkanisation vorgesehen werden oder bei zu verschweißenden Flächen bestehen.

Lager, insbesondere Elastomerlager, eines Fahrzeugs haben neben der Funktion zwei Bauteile elastisch miteinander zu verbinden und deren Kinematik zueinander zu definieren, in der Regel auch die Aufgabe, Schwingungen zu bedämpfen oder im Falle von Hydrolagern mittels hydraulischer Systeme zu tilgen bzw. Schwingungsanregungen zu isolieren. Die Dämpfung in einem nicht hydraulischen Lager wird zwar maßgeblich durch die Dämpfung des Elastomers beeinflusst, der Werkstoff von z. B. Gehäuseteilen kann aber auch einen erheblichen Beitrag zur Dämpfung leisten.

Einer der wichtigsten Transferpfade von Geräuschen in die Fahrzeugstruktur läuft über die sogenannten Domlager, die auch als Topmounts bezeichnet werden. Eine hohe Dämpfung dieser Baugruppe ist daher akustisch vorteilhaft.

Der vorliegenden Erfindung liegt die Aufgabe zugrunde, ein Lagerstrukturbauteil für ein Lager eines Fahrzeugs zu schaffen, das eine hohe Biegesteifigkeit bei gleichzeitig geringem Materialeinsatz sowie eine geringe Zykluszeit während der Herstellung aufweist und gleichzeitig eine hohe Genauigkeit sowie gleichmäßige Geometrie bereitstellt.

Zur Lösung der Aufgabe wird ein Lagerstrukturbauteil mit den Merkmalen nach Anspruch 1 vorgeschlagen.

Vorteilhafte Ausgestaltungen des Lagerstrukturbauteils sind Gegenstand der abhängigen Ansprüche.

Ein erfindungsgemäßes Lagerstrukturbauteil für ein Lager, insbesondere für ein Elastomerlager und/oder eine Zusatzfeder, eines Fahrzeugs, insbesondere eines Kraftfahrzeugs, besteht aus geschäumtem Kunststoff, wobei der geschäumte Kunststoff eine Integralschaumstruktur ausbildet, wobei wenigstens ein erster lokaler Abschnitt der Integralschaumstruktur eine Wandstärke aufweist, die größer als 4 mm ist.

Da das Lagerstrukturbauteil aus geschäumtem Kunststoff hergestellt ist, der eine Integralschaumstruktur ausbildet, kann weitestgehend auf Rippen verzichtet werden. Ferner weist das Lagerstrukturbauteil aufgrund seiner hohen lokalen Wandstärke analog zu den eingangs genannten Sandwichstrukturen ein sehr hohes Flächenträgheitsmoment auf, welches die Biegesteifigkeit bestimmt. Bedingt dadurch weist das Lagerstrukturbauteil eine hohe Bauteilsteifigkeit bezüglich Biegebelastungen auf. Darüber hinaus weist das Lagerstrukturbauteil aufgrund des Schaumes gute Dämpfungseigenschaften auf.

Bei dem Spritzgießen von Lagerstrukturbauteilen mit wenigstens einer Durchgangsöffnung entsteht jeweils im Bereich der Durchgangsöffnung durch Zusammenfließen des eingespritzten Kunststoffes zumindest eine Bindenaht, die in einer Zusammenfließzone oder Bindenahtzone angeordnet ist. Überraschenderweise wurde festgestellt, dass durch die Festigkeit der Bindenaht, welche die Durchgangsöffnung bedingt, höher ist, als es von einer geschäumten Bindenaht zu erwarten wäre. Ihre Festigkeit liegt höher, als wenn man die Schaumfestigkeit mit den üblichen Abminderungsfaktoren zur Berechnung der Bindenahtfestigkeit beaufschlagen würde. Dieses liegt daran, dass in der jeweiligen Bindenahtzone eine höhere Dichte als die mittlere Dichte des geschäumten Lagerstrukturbauteils auffindbar ist. Dies führt rund um oder nahe der wenigstens einen Durchgangsöffnung zu einer höheren Dichte und folglich zu einer höheren lokalen Festigkeit. Es wurde folglich festgestellt, dass das Einbringen einer Durchgangsöffnung in ein geschäumtes, Spritzgegossenes Bauteil genutzt werden kann, um lokal gezielt eine Dichteerhöhung einzustellen.

Durchgangsöffnungen der zuvor beschriebenen Art dienen in Strukturbauteilen häufig zur Aufnahme von lastbeaufschlagten Elementen, wie beispielsweise Anbindungselementen, Gewindeeinlegern oder Elastomerlagern. Daher sind die Bindenähte in der erfindungsgemäßen Bauteilklassen naturgemäß besonders hohen Belastungen ausgesetzt. Andere Bereiche in den Bauteilen sind hingegen häufig bezüglich ihrer Festigkeit überdimensioniert. Durch das Einbringen von Durchgangsöffnungen in mittels Spritzguss geschäumte Bauteile können daher gezielt Anbindungsbereiche mit einer höheren Dichte versehen werden, so dass dort lokal eine hohe Festigkeit erreicht wird, während die anderen, häufig überdimensionierten Bereiche durch das Schäumen an Festigkeit verlieren. Daher führt die gezielte Dichteanpassung durch das Einbringen von Durchgangslöchern im Bereich hoch belasteter Anbindungspunkte insgesamt zu einer optimierten Werkstoffauslastung.

Eine Bindenaht entsteht jeweils hinter einer Durchgangsöffnung. Dabei erfolgt die räumliche Orientierung ausgehend von einem Einspritzpunkt des geschäumten Kunststoffs. Der Einspritzpunkt ist somit vor der Durchgangsöffnung angeordnet.

Die wenigstens eine Durchgangsöffnung zur Aufnahme eines Verbindungselementes oder eines Lagers ermöglicht die Verbindung des Lagerstrukturbauteils mit einem Fahrzeugteil über das entsprechende Verbindungselement oder das Lager.

Das Lagerstrukturbauteil kann als Topmountgehäuse, Differentiallageradapter, Getriebequerbrücke, Pendelstütze, Koppelstange, Fahrwerkslenker, Motorlagergehäuse oder Motorlagertragarm ausgebildet sein. Ferner kann es eine Gehäusestruktur eines Elastomerlagers oder eine lastübertragende Struktur in unmittelbarer Verbindung mit einem Elastomerlager sein.

In einer vorteilhaften Ausgestaltung wird das geschäumte Lagerstrukturbauteil in einem Fertigungsschritt gefertigt. Der Schaum wird hierbei nicht vorgefertigt und in weiteren Verfahrensschritten mit Decklagen bewährt, sondern ein Schaumkern und eine Deckschicht werden mittels Schaumspritzguss, zum Beispiel mittels MuCell-Verfahren, in einem Verarbeitungsschritt hergestellt.

In einer vorteilhaften Ausgestaltung weist der erste lokale Abschnitt eine Wandstärke auf, die größer als 10 mm, insbesondere größer als 20 mm ist. Dadurch weist das Lagerstrukturbauteil ein hohes Flächenträgheitsmoment und damit eine hohe Biegesteifigkeit auf. Erfindungsgemäß ist erkannt worden, dass bei einer Schaumstruktur, welche auf Zug und Druck belastet wird, Porositäten von größer als 10 % zu deutlichen Einbußen der Festigkeit bzw. Steifigkeit führt, bei einer Biegebeanspruchung der Schaum jedoch deutlich geringeren Lasten ausgesetzt ist und primär auf Schub belastet wird. Somit sind deutlich höhere Wandstärken, mindestens 10 mm, Kernzonen höherer Porosität, größer als 10 %, insbesondere größer als 20 %, in den Lagerstrukturbauteilen von Vorteil. Somit ist erfindungsgemäß erkannt worden, dass für das MuCell-Verfahren unüblich große Wandstärken von größer als 10 mm bevorzugt größer als 20 mm, welche lokale Porositäten von größer 10 %, bevorzugt größer 20 %, in Kombination mit kompakten Deckschichten bei einer Porosität von kleiner 10 % vorteilhaft sind, um in Lagerstrukturbauteilen für den Fahrzeugbau, insbesondere Kraftfahrzeugbau, als Topmounts, Differentiallagerträger, Getriebequerbrücken oder Motorlager, einzusetzen, um hohe Biegesteifigkeiten bei gegebenem Werkstoffeinsatz zu erzielen. Die Wandstärke kann auch als Wanddicke bezeichnet werden. Vorteilhaft ist der erste lokale Abschnitt aus dem Kern und der Deckschicht gebildet.

In einer vorteilhaften Ausgestaltung weist die Integralschaumstruktur eine erste Schicht mit einer ersten Porosität und eine zweite Schicht mit einer zweiten Porosität auf, wobei die zweite Schicht von der ersten Schicht umgeben ist. Die erste Schicht weist vorteilhaft eine hohe Druck- und Zugfestigkeit beziehungsweise -steifigkeit auf. Die zweite Schicht ist dicker als die erste Schicht und wird bei einer Biegebelastung rein auf Schub beansprucht. Die erste Schicht kann auch als Deckschicht oder Decklage bezeichnet werden. Die zweite Schicht kann auch als Kern oder Kernschicht bezeichnet werden. Der Kern ist von der Deckschicht derart umgeben, dass im Querschnitt gesehen der Kern zwischen einer ersten Deckschicht und einer zweiten Decksicht angeordnet ist.

Die zweite Porosität ist größer oder gleich der ersten Porosität. Dadurch weist die Deckschicht eine hohe Druck- und Zugfestigkeit beziehungsweise -steifigkeit auf. Da die Kernschicht in dem Lagerstrukturbauteil die durch die Biegebelastung primär auf Zug und Druck belasteten Decklagen verbindet, ist der Kern primär auf Schub beansprucht. Zur Verbesserung der Biegesteifigkeit des Lagerstrukturbauteils ist bei gegebenem Bauteilgewicht die Dicke des Kerns entsprechend deren Porosität soweit zu erhöhen, bis die notwendige Schubsteifigkeit und Schubfestigkeit des geschäumten Kunststoffs optimal ausgenutzt wird. Zur Erzielung einer möglichst kompakten Deckschicht ist es von Vorteil, wenn der geschäumte Kunststoff an der Wand des Spritzgusswerkzeugs schnell abkühlt.

In einer vorteilhaften Ausgestaltung ist die erste Porosität kleiner oder gleich 10 %. Aufgrund der niedrigen Porosität weist die erste Schicht eine hohe Druck- und Zugfestigkeit bzw. - steifigkeit auf.

In einer vorteilhaften Ausgestaltung ist die zweite Porosität größer als 10 %, insbesondere größer als 20 %. Dadurch weist die Kernschicht eine ausreichend niedrige Dichte bei ausreichend hoher Schubfestigkeit und Schubsteifigkeit auf.

In einer vorteilhaften Ausgestaltung weist die erste Schicht eine Dicke auf, die größer als 1 mm, insbesondere größer als 2 mm ist. Dadurch wird eine sehr kompakte Deckschicht geschaffen, bei welcher die Porosität nicht größer als durchschnittlich 10 % ist. Bedingt dadurch weist die erste Schicht eine hohe Druck- und Zugfestigkeit bzw. Steifigkeit auf.

In einer vorteilhaften Ausgestaltung weist das Lagerstrukturbauteil einen zweiten lokalen Abschnitt auf, der mit einem weiteren Bauteil mittels eines Schweißverfahrens verbindbar ist, insbesondere mittels Kunststoff-Laserdurchstrahlschweißen verbindbar ist. Vorteilhaft ist der zweite lokalen Abschnitt mittels Kunststoff-Laserdurchstrahlschweißen mit einem weiteren Bauteil, zum Beispiel einem Deckel oder einer Verstärkungsstruktur, verbindbar ist. Dazu benötigt der zweite lokale Abschnitt im Bereich der Schweißnaht eine geringe Wandstärke, die vorteilhaft zwischen ca. 1 mm und ca. 4 mm beträgt und aus einem Werkstoff besteht, der einen zum Schweißen vorgesehenen Laserstrahl weder stark absorbiert, noch streut, sondern ausreichend laser-transparent ist, damit der Kunststoff in der Schweißebene aufgeschmolzen werden kann. Als lasertransparent wird erfindungsgemäß definiert, dass mindestens 5 % der Laserstrahlleistung bis in die Schweißebene des ersten Bauteils gelangt. Der korrespondierende, die Schweißnaht bildende Abschnitt des Schweißpartners weist in diesem Fall einen hohen Laser-Absorptionsgrad auf, damit die Energie des Lasers die Schweißzone nicht verlässt.

In einer vorteilhaften Ausgestaltung weist der zweite lokale Abschnitt eine Wandstärke auf, die zwischen ca. 1 mm und ca. 4 mm beträgt. Der zweite lokale Abschnitt kann lediglich aus der ersten Schicht gebildet sein. Ferner kann der zweite Abschnitt aus der ersten Schicht und der zweiten Schicht gebildet sein. Die Wandstärke kann auch als Wanddicke bezeichnet werden.

In einer vorteilhaften Ausgestaltung weist entweder der zweite lokale Abschnitt einen hohen Laser-Transmissionsgrad und der korrespondierende Randabschnitt des weiteren Bauteils einen hohen Laser-Absorptionsgrad auf, oder der zweite lokale Abschnitt weist einen hohen Laser-Absorptionsgrad und der korrespondierende Randabschnitt des weiteren Bauteils einen hohen Laser-Transmissionsgrad auf. Wenn der zweite lokale Abschnitt einen hohen Laser-Absorptionsgrad aufweist, dann ist es erforderlich, dass das an das Lagerstrukturbauteil anzuschweißende Bauteil eine hohe Laser-Transparenz aufweist, damit der Laser dieses Bauteil durchdringen und in das Lagerstrukturbauteil eindringen kann. Wenn der zweite lokale Abschnitt eine hohe Laser-Transparenz aufweist, dann ist es erforderlich, dass das an das Lagerstrukturbauteil anzuschweißende Bauteil einen hohen Laser-Absoprtionsgrad aufweist, damit der Laser den zweiten Abschnitt durchdringen und in das Bauteil eindringen kann.

Die Integralschaumstruktur des Lagerstrukturbauteils weist wenigstens eine Durchgangsöffnung zur Aufnahme eines Verbindungselementes oder eines Lagers auf. In einer vorteilhaften Ausgestaltung ist das Verbindungselement als Hülse ausgebildet, die in einer vorteilhaften Ausgestaltung endseitig mit einem Kragen versehen ist. Vorteilhaft ist die Hülse eine Metallhülse mit einem Innengewinde zur Verschraubung mit einem Fahrzeugteil. In einer vorteilhaften Ausgestaltung ist das Lager eine Elastomerbuchse, die einen Kern und einen den Kern umgebenden Elastomerkörper aufweist. Weiterhin vorteilhaft kann die Elastomerbuchse eine Außenhülse aufweisen. Die Außenhülse kann aus Metall oder Kunststoff sein.

Erfindungsgemäß weist die Integralschaumstruktur des Lagerstrukturbauteils drei oder vier Durchgangsöffnungen zur Aufnahme von Verbindungselementen und ein oder zwei Durchgangsöffnungen zur Aufnahme je eines Lagers auf. Dabei weist jede Durchgangsöffnung zumindest eine Bindenaht in einer Bindenahtzone auf.

In einer vorteilhaften Ausgestaltung ist das Verbindungselement oder das Lager formschlüssig, kraftschlüssig und/oder stoffschlüssig mit der Integralschaumstruktur verbunden. Das Verbindungselement oder das Lager kann in die Durchgangsöffnung eingepresst sein. Ferner kann das Verbindungselement oder das Lager in stoffschlüssig mit dem Lagerstrukturbauteil verbunden sein, indem das Verbindungselement oder das Lager in eine Spritzgussform eingelegt und anschließend von dem Kunststoff umschäumt werden. Ebenso kann das Verbindungselement in das Durchgangsloch eingeschraubt oder vorteilhaft mittels Ultraschall eingebettet sein.

Erfindungsgemäß ist im Bereich jeder Durchgangsöffnung wenigstens eine Bindenahtzone ausgebildet. Die Bindenahtzone weist in diesem Bereich eine höhere Dichte auf als die mittlere Dichte des Lagerstrukturbauteils. Die Festigkeit ist in diesem Bereich Zusammenfließens des geschäumten Kunststoffs erhöht. In der wenigstens einen Bindenahtzone ist zumindest jeweils eine Bindenaht ausgebildet. Da eine mit Treibmittel beladene Kunststoffschmelze eine niedrigere Viskosität gegenüber einer unbeladenen Schmelze aufweist und damit ein besseres Fließverhalten, ist eine besonders niedrige Einspritzzeit beziehungsweise Füllzeit der Form realisierbar. Durch die kurze Einspritzzeit ist die Schmelze beim Erreichen der angussfernen Bereiche tendenziell heißer als bei längeren Füllzeiten. Da die Bindenahtfestigkeit direkt von dem Verschmelzen der beteiligten Schmelzefronten abhängt, führt eine heißere Schmelzefront, bedingt durch schnelleres Einspritzen, welches durch die niedrigere Viskosität der Schmelze aufgrund der Beladung mit Treibmittel erreichbar ist, zu einer höheren Bindenahtfestigkeit. Somit sind insbesondere angussferne Bindenähte in mittels Schaumspritzguss hergestellten Bauteilen mit einer hohen Festigkeit herstellbar, wenn die Bindenähte hinter einer Durchgangsöffnung liegen, welche in der Bindenahtzone zu einer erhöhten Dichte gegenüber der mittleren Dichte des Bauteils führt. Somit ist die Festigkeit der im Bereich der Durchgangsöffnung wenigstens einen Bindenahtzone infolge des besseren Fließverhaltens der mit dem Gas beladenen Schmelze des Kunststoffs erhöht. Dadurch weist das Lagerstrukturbauteil im Bereich der Durchgangsöffnung eine ausreichende Festigkeit zum Einsetzen eines Verbindungselementes oder eines Lagers oder zur Befestigung des Lagerstrukturbauteils über das Verbindungselement oder das Lager an einem Fahrzeugteil auf. Die Bindenahtzone oder die Bindenaht entsteht an der Zusammenfließzone des geschäumten Kunststoffs. Die Festigkeit der Bindenahtzone wird durch die niedrigere Viskosität des geschäumten Kunststoffs infolge der Gasbeladung des geschäumten Kunststoffs, welche eine schnellere Füllzeit ermöglicht, gesteigert. Die Bindenahtzone entsteht vom Einspritzpunkt des geschäumten Kunststoffs aus gesehen hinter der Durchgangsöffnung. Die Bindenahtzone kann eine Vielzahl an Bindenähten aufweisen. Wenn das Lagerstrukturbauteil mehrere Durchgangsöffnungen aufweist, so ist im Bereich einer jeden Durchgangsöffnung mindestens eine Bindenahtzone ausgebildet, insbesondere vom Einspritzpunkt gesehen hinter jeder Öffnung, deren Festigkeit infolge des geschäumten Kunststoffs erhöht ist.

In einer vorteilhaften Ausgestaltung ist der geschäumte Kunststoff ein thermoplastischer Kunststoff, insbesondere ein faserverstärkter, thermoplastischer Kunststoff. Ein faserverstärkter Kunststoff weist eine hohe Steifigkeit auf und zudem fungieren die Fasern als Nukleierungsmittel für die sich bildenden Poren. Hierdurch wird eine besonders gleichmäßige, feine Porenstruktur erreicht. Insbesondere führt eine gleichmäßige Verteilung feiner Fasern aufgrund einer gleichmäßigen Keimbildung zu einer optimalen Porenstruktur der Integralschaumstruktur

In einer vorteilhaften Ausgestaltung ist die Integralschaumstruktur im MuCell-Verfahren hergestellt. Dadurch werden Schwindung und Verzug reduziert. Dies gelingt dadurch, dass in der Schmelze ein hoher Gasdruck vorherrscht, der ca. 30 bar betragen kann. Nach dem Erstarren der die Decksicht bildenden Randschicht führt dieser Innendruck dann zu einer gleichmäßigen Porenbildung, anstatt der Bildung einzelner großer Lunker. Gleichzeitig verringert das Gas aber auch die Viskosität der Schmelze, so dass der Einspritzdruck deutlich verringert werden kann und längere Fließwege möglich sind. Die Formen werden je nach einzustellender Porosität bzw. Zielgewicht unterfüllt. Der Nachdruck kann komplett entfallen, da der Gasdruck durch das Treibmittel ausreicht, um die Schwindung und den Verzug zu unterbinden und die Porenbildung zu fördern. Das MuCell-Verfahren hat gegenüber konventionellen Spritzgussverfahren den Vorteil, dass eine deutlich reduzierte Werkzeugschließkraft erforderlich ist und damit kleine und kostengünstige Maschinen eingesetzt werden können.

In einer vorteilhaften Ausgestaltung weist das Lagerstrukturbauteil einen ersten Aufnahmeabschnitt zur Aufnahme eines ersten Lagerelements und/oder einen zweiten Aufnahmeabschnitt zur Aufnahme eines zweiten Lagerelements auf. Der erste Aufnahmeabschnitt und/oder der zweite Aufnahmeabschnitt kann als eine in dem Lagerstrukturbauteil ausgebildete Aufnahmeöffnung zum Einsetzen eines ersten Lagerelements und/oder zweiten Lagerelementes ausgebildet sein. Ferner können der erste Aufnahmeabschnitt und/oder der zweite Aufnahmeabschnitt als Sitz für ein Lagerelement, beispielsweise ein Gleitlager oder ein Kugellager ausgebildet sein. Vorteilhaft ist der erste Aufnahmeabschnitt und/oder der zweite Aufnahmeabschnitt derart ausgebildet, dass das erste Lagerelement und/oder das zweite Lagerelement formschlüssig und/oder kraftschlüssig aufgenommen wird. Darüber hinaus kann das Lagerstrukturbauteil einen dritten Aufnahmeabschnitt zur Aufnahme eines dritten Lagerelements aufweisen, der als Sitz für ein Lager, wie beispielsweise ein Gleitlager oder Kugellager, ausgebildet ist. Das erste Lagerelement kann als Elastomerlager ausgebildet sein, das zweite Lagerelement kann als Zusatzfeder, beispielsweise aus PU-Schaum, ausgebildet sein.

In einer vorteilhaften Ausgestaltung ist wenigstens eines der Lagerelemente formschlüssig, kraftschlüssig und/oder stoffschlüssig mit dem Lagerstrukturbauteil verbunden. Um das Lagerelement in das Lagerstrukturbauteil zu integrieren, wird selbiges nach dem Einsetzen in den Aufnahmeabschnitt mittels Kraftschluss, Stoffschluss und/oder Formschluss an dem Lagerstrukturbauteil befestigt. Insbesondere für den Stoffschluss und den Formschluss ist der Integralschaum von Vorteil. So spielen Kunststoffschweißverfahren eine wichtige Rolle, um das Lagerelement festzulegen. Zum einen kann ein Deckelelement oder ein Ringelement mit dem Lagerstrukturbauteil verschweißt werden, um das Lagerelement in dem Aufnahmeabschnitt mittels Formschluss zu halten. Zum anderen kann das Lagerelement über eine Kunststoffstruktur, z. B. einer Außenhülse, haftend mit dem Lagerstrukturbauteil verbunden sein. Vorteilhaft wird die Kunststoffstruktur des Lagerelementes direkt mit dem Lagerstrukturbauteil verschweißt. Bei den meisten Kunststoffschweißverfahren, z.B. Kunststoff-Laserdurchstrahlschweißen, Ultraschallschweißen, Reibschweißen oder Heißgasschweißen, begünstigen eine hohe Ebenheit der Schweißzone die Schweißnahtfestigkeit. Durch die Integralschaumstruktur weist das Lagerstrukturbauteil einen geringen Verzug und damit eine ausgezeichnete Ebenheit und schließlich eine hohe Schweißnahtfestigkeit auf.

In einer vorteilhaften Ausgestaltung ist wenigstens eine der Aufnahmeabschnitte mittels eines Deckelelements oder Ringelementes verschließbar, um das in dem Aufnahmeabschnitt aufgenommene Lagerelement zu sichern. Durch das Deckelelement oder das Ringelement kann das Lagerelement an dem Lagerstrukturbauteil festgelegt werden. Das Deckelelement oder das Ringelement kann mittels Kraftschluss, Stoffschluss und/oder Formschluss an dem Lagerstrukturbauteil befestigt sein. Vorteilhaft ist das Deckelelement oder das Ringelement mit dem Lagerstrukturbauteil verschweißt. Zum Verscheißen ist es von Vorteil, wenn das Deckelelement oder das Ringelement aus Kunststoff ist.

Bevorzugt weist das Lagerstrukturbauteil im Bereich der Schweißzone zum Kunststoff-Laserdurchstrahlschweißen eine Wandstärke von ≤ 4 mm auf. Weiterhin ist es von Vorteil, wenn das Lagerstrukturbauteil im Bereich der Schweißzone einen niedrigen Fasergehalt aufweist.

Durch den Einsatz von Ultraschallschweißen, Reibschweißen oder Kunststoff-Laserdurchstrahlschweißen wird nur eine sehr lokale Wärme in der Schweißzone erzeugt, so dass ein nahe der Schweißzone eingesetztes Lagerelement kaum einer Gefahr der Schädigung durch den Wärmeeintrag ausgesetzt ist.

In einer vorteilhaften Ausgestaltung ist das Lagerstrukturbauteil Teil eines Lagers, insbesondere Teil eines Topmounts, eines Aggregatelagers oder Motorlagertragarms, eines Lenkers, insbesondere Fahrwerklenkers, einer Koppelstange, einer Pendelstütze oder einer Getriebeaufhängung ist, oder ein Anbauteil für ein Lager ist, oder ein Teil ist, das ein Lager aufnimmt. Das Aggregatelager kann ein Motorlager oder ein Getriebelager sein.

Nachfolgend werden das Lagerstrukturbauteil sowie weitere Merkmale und Vorteile anhand von Ausführungsbeispielen näher erläutert, die in den Figuren schematisch dargestellt sind. Hierbei zeigen:
- Fig. 1: einen Querschnitt durch ein Lagerstrukturbauteil gemäß einer ersten Ausführungsform;
- Fig. 2: einen vergrößerten Querschnitt durch die Integralschaumstruktur;
- Fig. 3: einen Querschnitt durch ein Lagerstrukturbauteil gemäß einer zweiten Ausführungsform;
- Fig. 4: einen Querschnitt durch ein Lagerstrukturbauteil gemäß einer dritten Ausführungsform;
- Fig. 5: einen Querschnitt durch ein Lagerstrukturbauteil gemäß einer vierten Ausführungsform;
- Fig. 6: eine Draufsicht auf ein Lagerstrukturbauteil gemäß einer fünften Ausführungsform;
- Fig. 7: einen Querschnitt durch das in Fig. 6 dargestellte Lagerstrukturbauteil entlang der Linie VII-VII; und
- Fig. 8: einen Längsschnitt durch ein Lagerstrukturbauteil gemäß einer sechsten Ausführungsform.

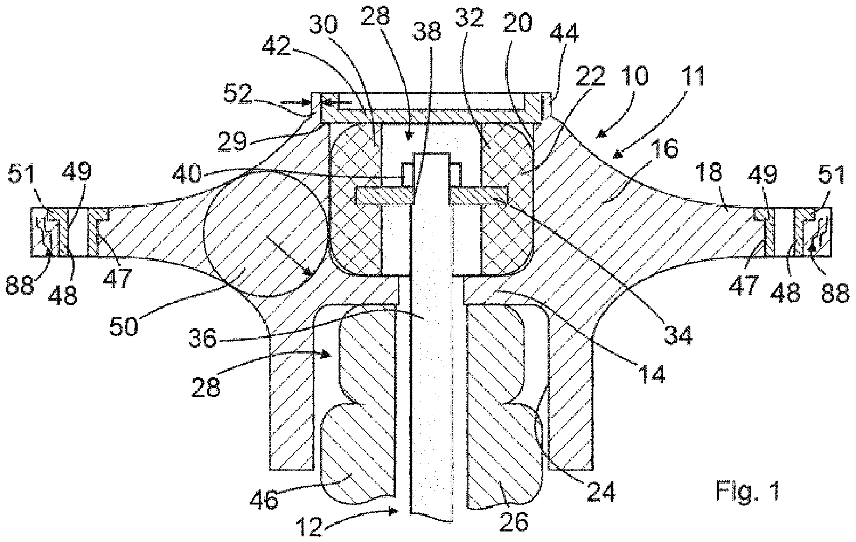

In Fig. 1 ist ein Lagerstrukturbauteil 10 gemäß einer ersten Ausführungsform gezeigt, das als Domlager oder Topmount 11 ausgebildet ist. Über das Topmount 11 wird ein Stoßdämpfer 12 an einer nicht dargestellten Fahrzeugstruktur, wie beispielsweise einer Fahrzeugkarosserie gelagert.

Das Topmount 11 ist aus geschäumtem Kunststoff, insbesondere faserverstärktem geschäumten Kunststoff im Schaumspritzgussverfahren, insbesondere im MuCell-Verfahren hergestellt.

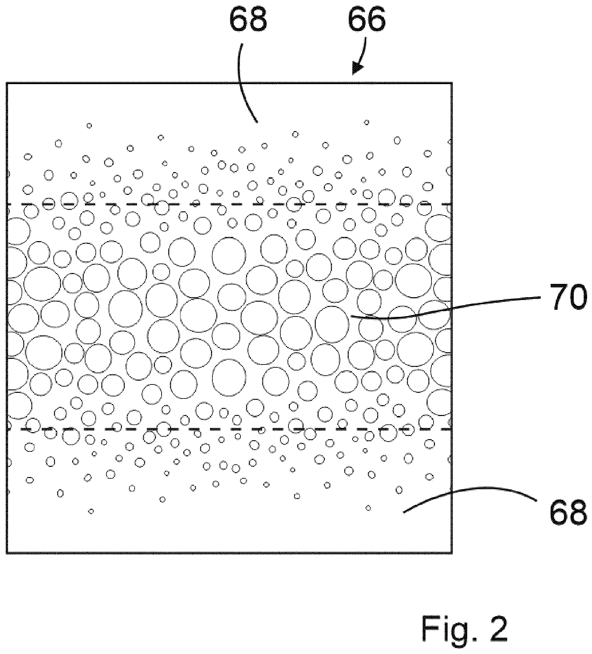

Wie in Fig. 2 ersichtlich ist, bildet der geschäumte Kunststoff eine Integral-schaumstruktur 66 aus, die eine erste Schicht 68 mit einer ersten Porosität und eine zweite Schicht 70 mit einer zweiten Porosität aufweist, wobei die zweite Schicht 70 von der ersten Schicht 68 umgeben ist. Die erste Schicht 68 kann auch als Deckschicht oder Decklage und die zweite Schicht 70 kann auch als Kern oder Kernschicht bezeichnet werden. Die erste Schicht 68 weist eine Dicke auf die größer als 1 mm, insbesondere größer als 2 mm ist, wobei die mittlere erste Porosität kleiner oder gleich 10 % ist und die mittlere zweite Porosität größer als 10 %, insbesondere größer als 20 % ist.

Das Topmount 11 weist einen Hauptkörperabschnitt 14 und zwei von dem Hauptabschnitt 14 abragende Übergangsabschnitte 16 auf, wobei jeder der Übergangsabschnitte 16 in einem Flanschabschnitt 18 mündet.

Der Hauptabschnitt 14 weist einen ersten Aufnahmeabschnitt 20 zur Aufnahme eines ersten Lagerelements 22 und einen zweiten Aufnahmeabschnitt 24 zur Aufnahme eines zweiten Lagerelements 26 auf. Die beiden Aufnahmeabschnitte 20, 24 sind als Aufnahmeöffnungen 28 ausgebildet.

Wie in Fig. 1 ersichtlich ist, ist das erste Lagerelement 22 ein Elastomerlager 30, das in den ersten Aufnahmeabschnitt 20 bzw. die Aufnahmeöffnung 28 eingesetzt, insbesondere eingepresst ist und das den Stoßdämpfer 12 elastisch an der Fahrzeugstruktur lagert.

Das Elastomerlager 30 weist einen Elastomerkörper 32 und eine Metallscheibe 34 auf. An der Metallscheibe 34 ist eine Dämpferstange 36 des Stoßdämpfers 12 befestigt. Hierzu ist das freie Ende der Dämpferstange 36 durch eine in der Metallscheibe 34 angebrachte Öffnung 38 hindurchdurchgeführt und mittels eines Befestigungselements 40 mit der Metallscheibe 34 verbunden. Das Befestigungselement 40 ist vorliegend als Mutter ausgebildet, welches auf ein Gewinde der Dämpferstange 36 aufschraubbar ist.

Wie ferner in Fig. 1 ersichtlich ist, ist das Elastomerlager 30 mittels eines Deckelelements 42 in dem ersten Aufnahmeabschnitt 20 gehalten. Das Deckelelement 42 ist hierzu in die Aufnahmeöffnung 28 des ersten Aufnahmeabschnitts 20 derart eingesetzt, das es an einem umlaufenden Vorsprung 29 des ersten Aufnahmeabschnitts 20 zur Anlage kommt. Zur Befestigung des Deckelelementes 42 an dem Lagerstrukturbauteil 10 ist das Deckelelement 42 mit einem zweiten lokalen Abschnitt 52 des Lagerstrukturbauteils 10 verschweißt. Der zweite lokale Abschnitt 52 ist vorliegend als dünnwandiger Randabschnitt 44 ausgebildet, der eine Wandstärke aufweist, die zwischen ca. 1 mm und ca. 6 mm beträgt. Bevorzugt wird das Deckelelement 42 mit dem Randabschnitt 44 mittels Kunststoff-Laserdurchstrahlschweißen verschweißt. Hierzu ist es erforderlich, dass entweder das Deckelelement 42 oder der Randabschnitt 44 aus Kunststoff ist und einen hohen Laser-Transmissionsgrad aufweist, wohingegen der jeweils andere Schweißpartner, also der Randabschnitt 44 oder das Deckelelement 42 einen hohen Laser-Absorptionsgrad aufweist.

Wie in Fig. 1 ersichtlich ist, ist in die Aufnahmeöffnung 28 des zweiten Aufnahmeabschnitts 24 eine Zusatzfeder 46 eingesetzt, durch welche sich die Dämpferstange 36 hindurch erstreckt. Die Zusatzfeder 46 kann aus einem PU-Schaum hergestellt sein.

Jeder der Flanschabschnitte 18 weist eine Durchgangsöffnung 47 auf, in die jeweils ein Verbindungselement 48 eingesetzt ist. Über die Verbindungselemente 48kann das Lagerstrukturbauteil 10 mit einer nicht dargestellten Fahrzeugstruktur verschraubt werden. Die Verbindungselemente 48 sind als Hülsen 49 mit einem endseitig angeordneten Kragen 51 aus Metall für Verschraubungen ausgebildet, um die Reaktionskräfte auf die nicht dargestellte Fahrzeugstruktur abzuleiten.

Wie in Fig. 1 ersichtlich ist, bilden sich im Bereich der Durchgangsöffnungen 47 Bindenahtzonen 88, die an der Zusammenfließzone des geschäumten Kunststoffs entstehen. Die Bindenahtzonen 88 entstehen, vom Einspritzpunkt für den geschäumten Kunststoff aus gesehen, hinter den Durchgangsöffnungen 47. Die Festigkeit dieser Bindenahtzonen 88 wird durch die niedrige Viskosität des geschäumten Kunststoffs infolge der Gasbeladung des geschäumten Kunststoffs, welche eine schnellere Füllzeit ermöglicht, gesteigert.

Während der bestimmungsgemäßen Verwendung wird das Lagerstrukturbauteil 10 durch den Stoßdämpfer 12 mittig primär auf Zug und Druck beansprucht. Die Reaktionskräfte werden an den Flanschabschnitten 18 über die Verbindungselemente 48 abgeleitet. Dadurch wird das gesamte Lagerstrukturbauteil 10 einer Biegelast unterzogen. Um eine möglichst hohe Biegesteifigkeit zu erlangen, weist der Übergangsabschnitt 16 einen ersten lokalen Abschnitt 50 auf, hier dargestellt durch den eingezeichneten Kreis, der zur Mitte hin zunimmt, bis er ein Maximum erreicht. Im Maximum weist der erste lokale Abschnitt 50 eine Wandstärke auf, die größer als 10 mm, insbesondere größer als 20 mm ist. Durch die große Wandstärke ist das Flächenträgheitsmoment, welches die Biegesteifigkeit bestimmt, sehr hoch, so dass die Bauteilsteifigkeit bezüglich Biegebelastungen des Lagerstrukturbauteils 10 sehr hoch ist.

Da die erste Schicht 68 eine Porosität kleiner oder gleich 10 % hat, weist diese eine hohe Druck- und Zugfestigkeit bzw. Steifigkeit auf. Die zweite Schicht 70, die in dem Lagerstrukturbauteil 10 die durch die Biegebelastung primär auf Zug und Druck belasteten ersten Schichten 68 verbindet, ist jedoch primär auf Schub beansprucht. Für die Biegesteifigkeit des Lagerstrukturbauteils 10 ist es daher von Vorteil, bei gegebenem Bauteilgewicht die Dicke der zweiten Schicht 70, also des Kerns und entsprechend dessen Porosität soweit zu erhöhen, bis die notwendige Schubfestigkeit und Steifigkeit des geschäumten Kunststoffs optimal ausgenutzt werden. Durch die große Wandstärke des ersten lokalen Abschnitts 50 ist die Biegesteifigkeit des Lagerstrukturbauteils 10 sehr hoch, was in einer erhöhten Bauteilsteifigkeit bezüglich Biegebelastungen resultiert.

Im Folgenden werden weitere Ausführungsbeispiele für das Lagerstrukturbauteil 10 beschrieben, wobei für gleiche und funktionsgleiche Teile dieselben Bezugszeichen verwendet werden.

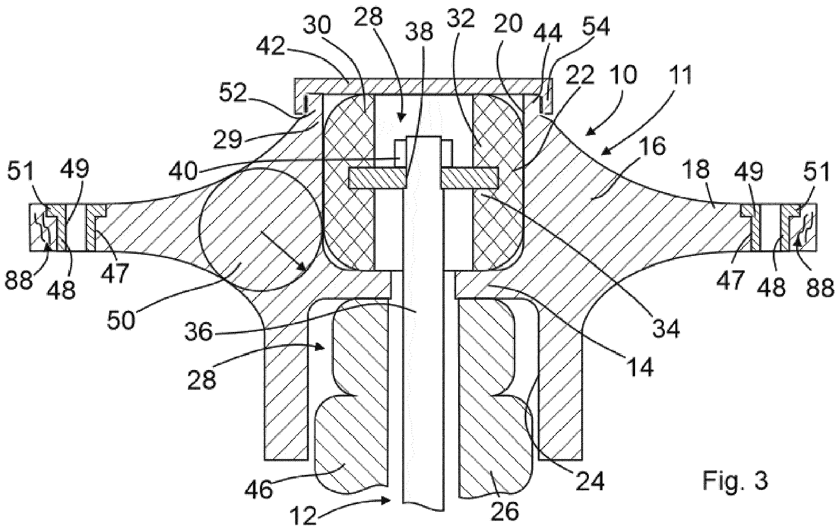

In Fig. 3 ist eine zweite Ausführungsform des Lagerstrukturbauteils 10 gezeigt, die sich von der ersten Ausführungsform dadurch unterscheidet, dass das Deckelelement 42 den Randabschnitt 44 umgreift. Das Deckelelement 42 ist mit dem Randabschnitt 44 mittels Kunststoff-Laserdurchstrahlschweißen verschweißt, indem der Randabschnitt 44 einen hohen Laser-Absorptionsgrad aufweist und ein Kragenabschnitt 54 des Deckelelements 42 einen hohen Laser-Transmissionsgrad aufweist. Dieser Aufbau erlaubt zum Beispiel eine Kohlenstofffaserverstärkung des Strukturbauteils, durch welche dieses naturgemäß seine Lasertransparenz verliert.

Da ein sehr hoher Glasfasergehalt der Transparenz entgegensteht, vereinfacht dieser Aufbau die Schweißbarkeit. Der dünne, bevorzugt 4 mm dicke, lasertransparente Kragenabschnitt 54 ist in dem Deckelelement 42 integriert. Die korrespondierende Schweißfläche an dem Lagerstrukturbauteil 10 kann sich folglich an einer dickeren Wand befinden. Dies ist für den Spritzgussvorgang des Lagerstrukturbauteils 10 von Vorteil, und zudem erlaubt es ferner die Einstellung einer höheren Porosität. Dies liegt daran, dass in dem Schaumspritzguss nicht an der dicksten Stelle, sondern häufig an der dünnsten Stelle angespritzt wird. Das Lagerstrukturbauteil 10 wird dann gezielt unterfüllt. Die komplette Füllung wird durch die schäumbedingte Expansion der Schmelze erreicht. Durch den im Vergleich zu Figur 1 dickeren ersten lokalen Abschnitt 52 kann dieser auch erst zum Schluss gefüllt werden, so dass sich eine höhere Flexibilität bezüglich der Lage des Anspritzpunktes ergibt.

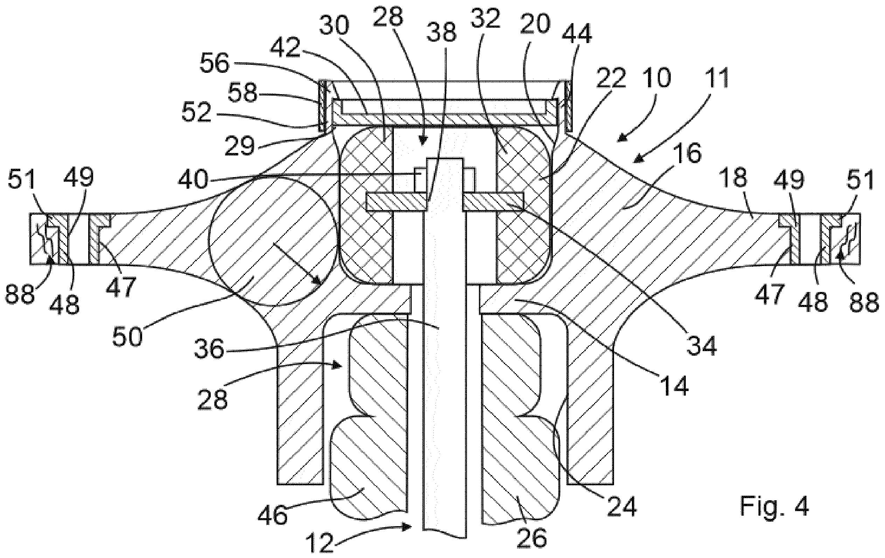

In Fig. 4 ist eine dritte Ausführungsform des Lagerstrukturbauteils 10 gezeigt, die sich von den anderen Ausführungsformen dadurch unterscheidet, dass das Deckelelement 42 mittels einer Klipsverbindung mit dem Lagerstrukturbauteil 10 verbunden ist. Hierzu weist der Randabschnitt 44 innenumfangsseitig umlaufend Schnappelemente 56 auf, die das Deckelelement 42 halten. Zur Fixierung der Schnappelemente 56 ist von außen ein festes Ringelement 56, beispielsweise ein Metallring, über die Schnappelemente 56 geschoben, damit diese unter Belastung in Position gehalten werden.

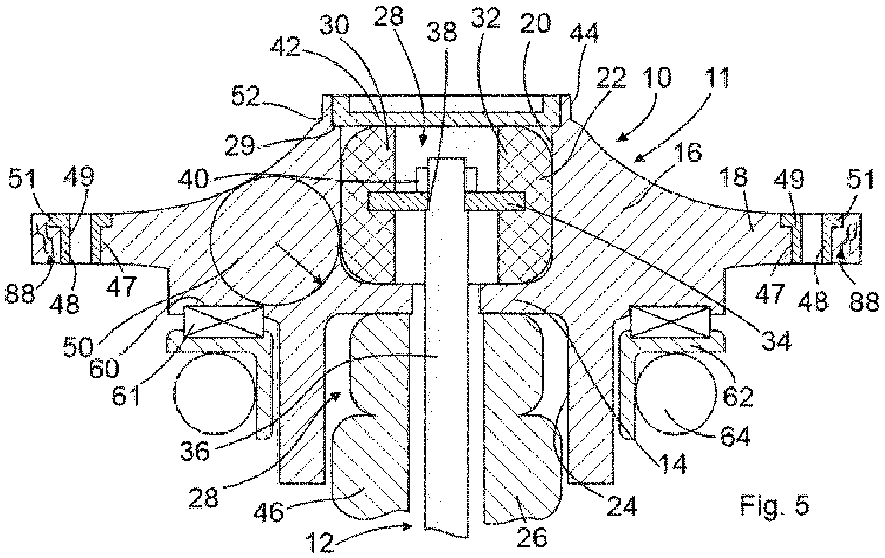

In Fig. 5 ist eine vierte Ausführungsform des Lagerstrukturbauteils 10 gezeigt, die sich von den anderen Ausführungsformen dadurch unterscheidet, dass ein Lagersitz 60 für ein Gleit- oder Kugellager 61 vorgesehen ist. Dieser fixiert mit rotatorischem Freiheitsgrad eine Federauflage 62 zur Auflage eines Federelements 64. Dadurch kann sich die Federauflage 62 drehbeweglich gegenüber dem Lagerstrukturbauteil 10 abstützen. Das in Figur 4 gezeigte Topmount kommt zum Beispiel in einer McPherson Vorderachse oder in gelenkten Hinterachsen zum Einsatz.

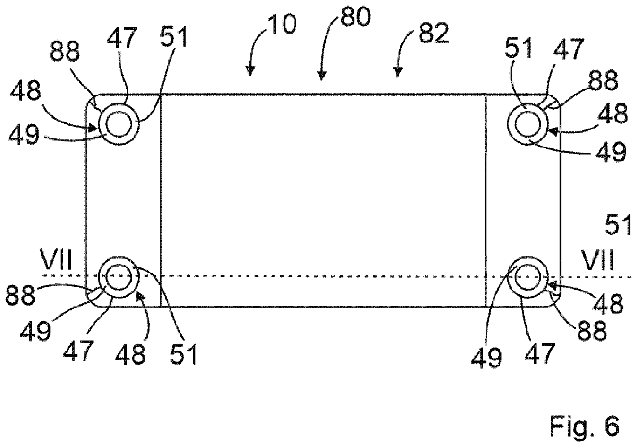

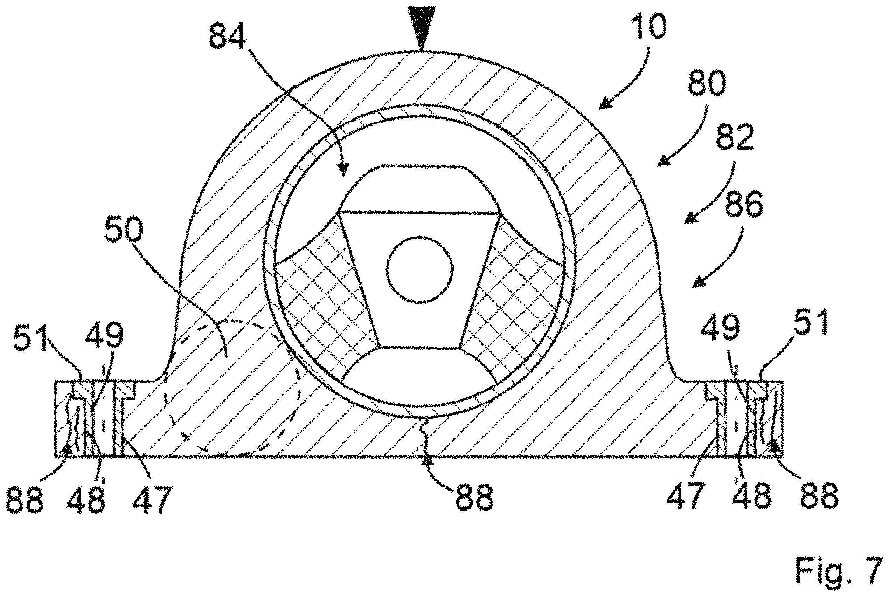

In den Fig. 6 und 7 ist eine fünfte Ausführungsform des Lagerstrukturbauteils 10 gezeigt, das als Aggregatelagergehäuse 80 eines Aggregatelagers 82 ausgebildet ist. Das Aggregatelager 82 weist neben dem Aggergatelagergehäuse 80, ein Lager 84 in Form eines Elastomerlagers 86 und zwei als Hülsen 49 ausgebildete Verbindungselemente 48 auf und dient zur Anbindung eines nicht dargestellten Kraftfahrzeugantriebs, wie beispielsweise einem Verbrennungsmotor oder einem Elektromotor, an eine nicht dargestellte Fahrzeugkarosserie oder ein nicht dargestelltes Fahrzeugteil. Das Aggregatelager kann beispielsweise ein Motorlager sein. Das Elastomerlager 86 und die Hülsen 49 sind in Durchgangsöffnungen 47 eingesetzt, insbesondere eingepresst.

Wie in den Fig. 6 und 7 ersichtlich ist, bilden sich im Bereich der Durchgangsöffnungen 47 Bindenahtzonen 88, die an der Zusammenfließzone des geschäumten Kunststoffs entstehen. Die Bindenahtzonen 88 entstehen vom Einspritzpunkt für den geschäumten Kunststoff aus gesehen, der vorliegend als Dreieck dargestellt, hinter den Durchgangsöffnungen 47. Die Festigkeit dieser Bindenahtzonen 88 wird durch die niedrige Viskosität des geschäumten Kunststoffs infolge der Gasbeladung des geschäumten Kunststoffs, welche eine schnellere Füllzeit ermöglicht, gesteigert.

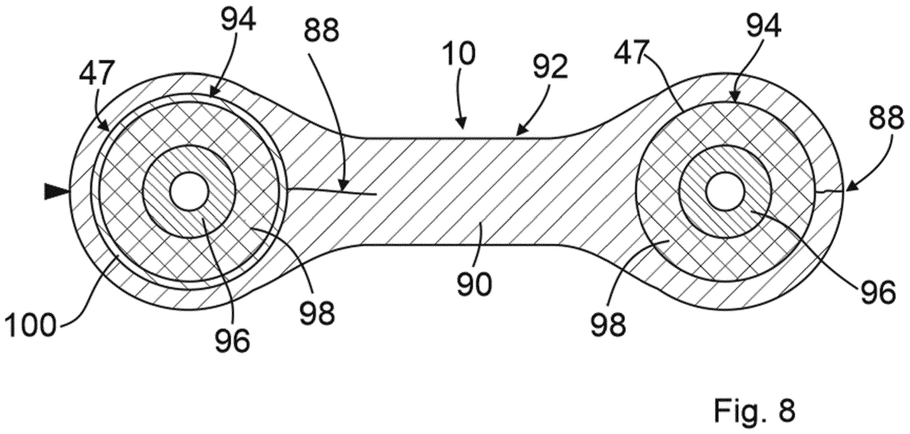

Wie zudem in Fig. 6 ersichtlich ist, weist das als Aggregatelagergehäuse 80 ausgebildete Lagerstrukturbauteil 10 einen ersten lokalen Abschnitt 50 mit einer Wandstärke auf, die größer als 10 mm, insbesondere größer als 20 mm ist. Durch die große Wandstärke ist das Flächenträgheitsmoment, welches die Biegesteifigkeit bestimmt, sehr hoch, so dass die Bauteilsteifigkeit bezüglich Biegebelastungen des Lagerstrukturbauteils 10 sehr hoch ist. In Figur 8 ist eine sechste Ausführungsform des Lagerstrukturbauteils 10 gezeigt, das als Lenkergehäuse 90 eines Lenkers 92 ausgebildet ist. Der Lenker 92 weist neben dem Lenkergehäuse 90 zwei Lager 84 auf, die in Durchgangsöffnungen 47 eingesetzt, insbesondere eingepresst oder mittels Ultraschall eingebettet sind.

Beide Lager 84 sind als Elastomerbuchsen 94 ausgebildet und weisen einen Kern 96 und einen den Kern umgebenden Elastomerkörper 98 auf. Wie in Figur 8 ersichtlich ist, weist die linke Elastomerbuchse 94 zudem eine den Elastomerkörper 98 umgebende Außenhülse 100 aus Metall auf.

Wie ferner in Fig. 8 ersichtlich ist, bilden sich im Bereich der Durchgangsöffnungen 47 Bindenahtzonen 88, die vom Einspritzpunkt aus gesehen, hinter den Durchgangsöffnungen 47 entstehen. Die Festigkeit dieser Bindenahtzonen 88 ist durch das bessere Fließverhalten des geschäumten Kunststoffes erhöht.

Das Lagerstrukturbauteil 10 für den Automobilbau weist trotz seiner Herstellung im MuCell-Verfahren große Wandstärken von größer 10 mm, bevorzugt größer 20 mm, welche lokale Porositäten von größer 10 %, bevorzugt größer 20 % in Kombination mit kompakten Deckschichten von mindestens 2 mm bei einer Porosität von kleiner 10 % auf, wodurch eine hohe Biegesteifigkeit und gleichzeitig geringer Materialeinsatz erzielt werden kann.

### Bezugszeichenliste

- 10: Lagerstrukturbauteil
- 11: Topmount
- 12: Stoßdämpfer
- 14: Hauptabschnitt
- 16: Übergangsabschnitt
- 18: Flanschabschnitt
- 20: erster Aufnahmeabschnitt
- 22: erstes Lagerelement
- 24: zweiter Aufnahmeabschnitt
- 26: zweites Lagerelement
- 28: Aufnahmeöffnung
- 29: Vorsprung
- 30: Elastomerlager
- 32: Elastomerkörper
- 34: Metallscheibe
- 36: Dämpferstange
- 38: Öffnung
- 40: Befestigungselement
- 42: Deckelelement
- 44: Randabschnitt
- 46: Zusatzfeder
- 47: Durchgangsöffnung
- 48: Verbindungselement
- 49: Hülse
- 50: erster lokaler Abschnitt
- 51: Kragen
- 52: zweiter lokaler Abschnitt
- 54: Kragenabschnitt
- 56: Schnappelement
- 58: Ringelement
- 60: Lagersitz
- 61: Gleit- oder Kugellager
- 62: Federauflage
- 64: Federelement
- 66: Integralschaumstruktur
- 68: erste Schicht
- 70: zweite Schicht
- 80: Aggergatelagergehäuse
- 82: Aggregatelager
- 84: Lager
- 86: Elastomerlager
- 88: Bindenahtzone
- 90: Lenkergehäuse
- 92: Lenker
- 94: Elastomerbuchse
- 96: Kern
- 98: Elastomerkörper
- 100: Außenhülse

## Patentansprüche

1. Lagerstrukturbauteil (10) für ein Lager eines Fahrzeugs, wobei das Lagerstrukturbauteil (10) aus geschäumtem Kunststoff besteht und der geschäumte Kunststoff eine Integralschaumstruktur (66) ausbildet, wobei wenigstens ein erster lokaler Abschnitt (50) der Integralschaumstruktur (66) eine Wandstärke aufweist, die größer als 4 mm ist, **dadurch gekennzeichnet, dass** die Integralschaumstruktur (66) des Lagerstrukturbauteils (10) drei oder vier Durchgangsöffnungen (47) zur Aufnahme von Verbindungselementen (48) und ein oder zwei Durchgangsöffnungen (47) zur Aufnahme je eines Lagers (84) aufweist, wobei jede Durchgangsöffnung (47) zumindest eine Bindenaht in einer Bindenahtzone (88) aufweist.

2. Lagerstrukturbauteil (10) nach Anspruch 1, **dadurch gekennzeichnet, dass** der erste lokale Abschnitt (50) eine Wandstärke aufweist, größer als 10 mm ist, insbesondere größer als 20 mm ist.

3. Lagerstrukturbauteil (10) nach Anspruch 1 oder 2, **dadurch gekennzeichnet, dass** die Integralschaumstruktur (66) eine erste Schicht (68) mit einer ersten Porosität und eine zweite Schicht (70) mit einer zweiten Porosität aufweist, wobei die zweite Schicht (70) von der ersten Schicht (68) umgeben ist, wobei die erste Porosität kleiner oder gleich 10 % ist und/oder die zweite Porosität größer als 10 % ist.

4. Lagerstrukturbauteil (10) nach Anspruch 3, **dadurch gekennzeichnet, dass** die zweite Porosität größer als 20 % ist.

5. Lagerstrukturbauteil (10) nach einem der vorhergehenden Ansprüche, **dadurch gekennzeichnet, dass** die Integralschaumstruktur (66) wenigstens einen zweiten lokalen Abschnitt (52) aufweist, der mit einem weiteren Bauteil mittels eines Schweißverfahrens verbindbar ist, insbesondere mittels Kunststoff-Laserdurchstrahlschweißen verbindbar ist.

6. Lagerstrukturbauteil (10) nach einem der vorhergehenden Ansprüche, **dadurch gekennzeichnet, dass** eines der Verbindungselemente (48) oder eines der Lager (84) formschlüssig, kraftschlüssig und/oder stoffschlüssig mit der Integralschaumstruktur (66) verbindbar ist.

7. Lagerstrukturbauteil (10) nach einem der vorhergehenden Ansprüche, **dadurch gekennzeichnet, dass** der geschäumte Kunststoff ein thermoplastischer Kunststoff, insbesondere ein faserverstärkter thermoplastischer Kunststoff ist.

8. Lagerstrukturbauteil (10) nach einem der vorhergehenden Ansprüche, **dadurch gekennzeichnet, dass** die Integralschaumstruktur (66) im MuCell-Verfahren hergestellt ist.

9. Lagerstrukturbauteil (10) nach einem der vorhergehenden Ansprüche, **dadurch gekennzeichnet, dass** das Lagerstrukturbauteil (10) einen ersten Aufnahmeabschnitt (20) zur Aufnahme eines ersten Lagerelementes (22) und/oder einen zweiten Aufnahmeabschnitt (24) zur Aufnahme eines zweiten Lagerelementes (26) aufweist.

10. Lagerstrukturbauteil (10) nach Anspruch 9, **dadurch gekennzeichnet, dass** wenigstens eines der Lagerelemente (22,26) formschlüssig, kraftschlüssig und/oder stoffschlüssig mit dem Lagerstrukturbauteil (10) verbindbar ist.

11. Lagerstrukturbauteil (10) nach Anspruch 9 oder 10, **dadurch gekennzeichnet, dass** wenigstens einer der Aufnahmeabschnitte (20, 24) mittels eines Deckelelementes (42) und/oder Ringelementes (58) verschließbar ist, um ein in dem ersten Aufnahmeabschnitt aufnehmbahre erste Lagerelement und/oder ein in dem zweiten Aufnahmeabschnitt aufnehmbare zweite Lagerelement zu sichern.

12. Lagerstrukturbauteil (10) nach einem der vorhergehenden Ansprüche, **dadurch gekennzeichnet, dass** das Lagerstrukturbauteil (10) rippenfrei ausgebildet ist.

## Claims

1. Bearing structure component (10) for a bearing of a vehicle, wherein the bearing structure component (10) consists of foamed plastic and the foamed plastic forms an integral foam structure (66), wherein at least a first local section (50) of the integral foam structure (66) has a wall thickness which is greater than 4 mm, **characterised in that** the integral foam structure (66) of the bearing structure component (10) has three or four through-openings (47) for receiving connecting elements (48) and one or two through-openings (47) for receiving one bearing (84) each, each through-opening (47) having at least one weld line in a weld line zone (88).

2. Bearing structure component (10) according to claim 1, **characterised in that** the first local section (50) has a wall thickness greater than 10 mm, in particular greater than 20 mm.

3. Bearing structure component (10) according to claim 1 or 2, **characterised in that** the integral foam structure (66) has a first layer (68) with a first porosity and a second layer (70) with a second porosity, the second layer (70) being surrounded by the first layer (68), the first porosity being less than or equal to 10 % and/or the second porosity being greater than 10 %.

4. Bearing structure component (10) according to claim 3, **characterised in that** the second porosity is greater than 20%.

5. Bearing structure component (10) according to one of the preceding claims, **characterised in that** the integral foam structure (66) has at least one second local section (52) which can be connected to a further component by means of a welding process, in particular can be connected by means of plastic laser transmission welding.

6. Bearing structure component (10) according to one of the preceding claims, **characterised in that** one of the connecting elements (48) or one of the bearings (84) can be connected to the integral foam structure (66) in a form-fit, force-fit and/or material-fit manner.

7. Bearing structure component (10) according to one of the preceding claims, **characterised in that** the foamed plastic is a thermoplastic plastic, in particular a fibre-reinforced thermoplastic plastic.

8. Bearing structure component (10) according to one of the preceding claims, **characterised in that** the integral foam structure (66) is produced using the MuCell-process.

9. Bearing structure component (10) according to one of the preceding claims, **characterised in that** the bearing structure component (10) has a first receiving section (20) for receiving a first bearing element (22) and/or a second receiving section (24) for receiving a second bearing element (26).

10. Bearing structure component (10) according to claim 9, **characterised in that** at least one of the bearing elements (22, 26) can be connected to the bearing structure component (10) in a form-fit, force-fit and/or material-fit manner.

11. Bearing structure component (10) according to claim 9 or 10, **characterised in that** at least one of the receiving sections (20, 24) can be closed by means of a cover element (42) and/or ring element (58) in order to secure a first bearing element which can be received in the first receiving section and/or a second bearing element which can be received in the second receiving section.

12. Bearing structure component (10) according to one of the preceding claims, **characterised in that** the bearing structure component (10) is designed without ribs.

## Revendications

1. Composant de structure de palier (10) pour un palier d'un véhicule, le composant de structure de palier (10) étant constitué de matière plastique expansée et la matière plastique expansée formant une structure de mousse intégrale (66), au moins une première section locale (50) de la structure de mousse intégrale (66) présentant une épaisseur de paroi qui est supérieure à 4 mm, **caractérisé en ce que** la structure de mousse intégrale (66) de l'élément structurel de palier (10) présente trois ou quatre ouvertures de passage (47) pour recevoir des éléments de liaison (48) et une ou deux ouvertures de passage (47) pour recevoir chacune un palier (84), chaque ouverture de passage (47) présentant au moins une couture de liaison dans une zone de couture de liaison (88).

2. Composant de structure de palier (10) selon la revendication 1, **caractérisé en ce que** la première section locale (50) présente une épaisseur de paroi supérieure à 10 mm, en particulier supérieure à 20 mm.

3. Composant de structure de palier (10) selon la revendication 1 ou 2, **caractérisé en ce que** la structure de mousse intégrale (66) présente une première couche (68) avec une première porosité et une deuxième couche (70) avec une deuxième porosité, la deuxième couche (70) étant entourée par la première couche (68), la première porosité étant inférieure ou égale à 10 % et/ou la deuxième porosité étant supérieure à 10 %.

4. Composant de structure de palier (10) selon la revendication 3, **caractérisé en ce que** la deuxième porosité est supérieure à 20 %.

5. Composant de structure de palier (10) selon l'une des revendications précédentes, **caractérisé en ce que** la structure de mousse intégrale (66) présente au moins une deuxième section locale (52) qui peut être reliée à un autre élément de construction au moyen d'un procédé de soudage, en particulier qui peut être reliée au moyen d'un soudage par faisceau laser de matière plastique.

6. Composant de structure de palier (10) selon l'une des revendications précédentes, **caractérisé en ce que** l'un des éléments de liaison (48) ou l'un des paliers (84) peut être relié à la structure de mousse intégrale (66) par complémentarité de forme, par adhérence et/ou par matière.

7. Composant de structure de palier (10) selon l'une des revendications précédentes, **caractérisé en ce que** la matière plastique expansée est une matière thermoplastique, en particulier une matière thermoplastique renforcée par des fibres.

8. Composant de structure de palier (10) selon l'une des revendications précédentes, **caractérisé en ce que** la structure en mousse intégrale (66) est fabriquée selon le procédé MuCell.

9. Composant de structure de palier (10) selon l'une des revendications précédentes, **caractérisé en ce que** l'élément de structure de palier (10) présente une première section de réception (20) pour recevoir un premier élément de palier (22) et/ou une deuxième section de réception (24) pour recevoir un deuxième élément de palier (26).

10. Composant de structure de palier (10) selon la revendication 9, **caractérisé en ce qu'**au moins l'un des éléments de palier (22, 26) peut être relié au composant de structure de palier (10) par une liaison par la forme, par une liaison par la force et/ou par une liaison par la matière.

11. Composant de structure de palier (10) selon la revendication 9 ou 10, **caractérisé en ce qu'**au moins l'une des sections de logement (20, 24) peut être fermée au moyen d'un élément de couvercle (42) et/ou d'un élément annulaire (58), afin de sécuriser un premier élément de palier pouvant être logé dans la première section de logement et/ou un deuxième élément de palier pouvant être logé dans la deuxième section de logement.

12. Composant de structure de palier (10) selon l'une des revendications précédentes, **caractérisé en ce que** le composant de structure de palier (10) est réalisé sans nervures.
